(19) Europäisches Patentamt
European Patent Office
Office européen des brevets

(11) Numéro de publication: **0 071 547**
**B1**

(12) # FASCICULE DE BREVET EUROPEEN

(45) Date de publication du fascicule du brevet: **31.10.84**

(51) Int. Cl.³: **B 01 D 19/04**, C 12 P 19/04 // C11D3/37

(21) Numéro de dépôt: **82420093.5**

(22) Date de dépôt: **07.07.82**

(54) **Dispersions aqueuses de compositions organopolysiloxaniques antimousses.**

(30) Priorité: **15.07.81 FR 8113746**

(43) Date de publication de la demande: **09.02.83 Bulletin 83/6**

(45) Mention de la délivrance du brevet: **31.10.84 Bulletin 84/44**

(84) Etats contractants désignés: **DE NL SE**

(56) Documents cités:
**DE-A-2 408 290**
**FR-A-1 270 723**
**FR-A-1 554 642**
**FR-A-2 094 322**
**FR-A-2 290 934**
**FR-A-2 315 973**
**US-A-3 020 207**
**US-A-3 054 689**

(73) Titulaire: **RHONE-POULENC SPECIALITES CHIMIQUES, "Les Miroirs" 18, Avenue d'Alsace, F-92400 Courbevoie (FR)**

(72) Inventeur: **Boyadjian, Raymond, 54, rue Coli, F-69150 Decines (FR)**
Inventeur: **Vialle, Michel, 149, rue Challemel Lacour, F-69008 Lyon (FR)**

(74) Mandataire: **Chichery, Guy et al, RHONE-POULENC RECHERCHES Service Brevets Chimie et Polymères Centre de Recherches de Saint-Fons B.P. 62, F-69192 St-Fons Cédex (FR)**

EP 0 071 547 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention a pour objet des dispersions aqueuses, colloïdales, pseudoplastiques, de compositions organopolysiloxaniques antimousses, renfermant, comme agent épaississant, un polysaccharide issu de la fermentation de glucides.

Des émulsions et dispersions aqueuses de compositions organopolysiloxaniques antimousses sont connues depuis de nombreuses années; elles renferment généralement des agents tensio-actifs et parfois des agents épaississants.

Le brevet américain 3 423 340 décrit des émulsions de ce type qui sont constituées chacune:

(1) d'une composition antimousse organopolysiloxanique comprenant une huile diméthylpolysiloxanique et de la silice finement divisée
(2) d'agents tensio-actifs comprenant le monostéarate de sorbitan polyoxyéthylèné, le monostéarate de sorbitan et/ou le monostéarate de glycérol
(3) d'un agent épaississant comprenant le carboxyméthylcellulose de sodium.

Elles sont préparées en 2 étapes: tout d'abord mélange de la composition antimousse, des agents tensio-actifs et de l'agent épaississant puis dispersion de ce mélange dans de l'eau par broyage. Elles ont une bonne efficacité antimousse mais recèlent des quantités élevées d'agents tensio-actifs et ne sont pas toujours très stables au stockage; de plus elles sont faiblement pseudoplastiques ce qui nécessite une certaine dépense d'énergie pour les agiter.

Le brevet américain 4 039 469 décrit des émulsions aqueuses de compositions organopolysiloxaniques antimousses préparées par un procédé un peu différent. Il consiste en effet, à mélanger 2 composants, l'un formé d'une solution aqueuse d'un épaississant usuel tel que le carboxyméthylcellulose, l'autre formé d'une émulsion aqueuse d'une composition organopolysiloxanique antimousse. Cette dernière est obtenue en plusieurs étapes:

(i) dissolution d'un agent tensio-actif dans de l'eau
(2i) dispersion de la composition antimousse dans la solution (i)
(3i) broyage de la dispersion issue de (2i) jusqu'à formation d'une émulsion homogène et stable.

Bien que ce procédé permette d'utiliser plus rationnellement les installations industrielles de fabrication d'émulsions antimousses, il nécessite, cependant, la préparation préalable par broyage d'une émulsion aqueuse et ensuite sa manipulation pour l'ajouter à la solution aqueuse de l'épaississant. Par ailleurs la pseudoplasticité des émulsions aqueuses ainsi obtenues est faible et leur stabilité au stockage n'est pas parfaite; cet ensemble de propriétés doit être encore amélioré.

La présente invention se propose de pallier les inconvénients précédents à l'aide de nouvelles dispersions aqueuses de compositions organopolysiloxaniques antimousses, lesquelles dispersions sont pseudoplastiques et stables au stockage. Elle a donc pour objet ces dispersions et aussi leur procédé de préparation.

Ces dispersions aqueuses comprennent (les pourcentages étant exprimés en poids):

(A) 3 à 20% d'une composition organopolysiloxanique antimousse
(B) 0 à 5% d'un ou plusieurs agents tensio-actifs non ioniques
(C) 0,3 à 2% d'un agent épaississant

et de l'eau en quantité suffisante pour compléter à 100%.

Elles sont caractérisées en ce que l'agent épaississant (C) est choisi parmi les polysaccharides obtenus par fermentation de glucides au moyen d'un microorganisme du genre Xanthomonas.

La composition organopolysiloxanique antimousse (A), représentant de 3 à 20%, de préférence 5 à 15% des dispersions aqueuses conformes à l'invention, comprend généralement:

— (h) 100 parties d'une huile diorganopolysiloxanique de formule $R_3SiO(R_2SiO)_nSiR_3$ dans laquelle les symboles R, identiques ou différents, représentent des radicaux méthyles, éthyles, vinyles, phényles, au moins 80% des radicaux étant des radicaux méthyles, le symbole n représente un nombre entier ou fractionnaire d'une valeur suffisante pour assurer une viscosité de 20 mPa · s à 50 000 mPa · s à 25°C
— (s) 0,05 à 15 parties, de préférence 0,8 à 12 parties, d'une silice finement divisée dont les particules primaires ont on diamètre moyen inférieur à 0,1 µm.

L'huile (h) peut être formée de motifs diorganosiloxy choisis parmi ceux de formules

$(CH_3)_2SiO$, $CH_3(CH_2{=}CH)SiO$,
$CH_3(C_2H_5)SiO$, $CH_3(C_6H_5)SiO$, $(C_6H_5)_2SiO$,

et de motifs triorganisiloxy bloqueurs choisis parmi ceux de formules

$(CH_3)_3SiO_{0,5}$, $(CH_3)_2CH_2{=}CHSiO_{0,5}$,
$(CH_3)_2C_6H_5SiO_{0,5}$, $CH_3(C_6H_5)_2SiO_{0,5}$,
$CH_3(CH_2{=}CH)C_6H_5SiO_{0,5}$, $CH_2{=}CH(C_6H_5)_2SiO_{0,5}$, $(C_6H_5)_3SiO_{0,5}$.

De préférence l'huile (h) répond à la formule

$$(CH_3)_3SiO[(CH_3)_2SiO]_{n'}Si(CH_3)_3$$

dans laquelle le symbole n' représente un nombre entrier ou fractionnaire de valeur suffisante pour assurer une viscosité de 50 à 5000 mPa · s à 25° C.

L'huile (h) est commercialisée par les fabricants de silicones; en outre elle peut être aisément préparée en suivant les techniques déjà décrites (brevets français 978 058, 1 025 150).

La silice (s) est le plus souvent choisie parmi les silices de combustion, de précipitation, les aérogels de silice. Elle a une surface spécifique égale ou supérieure à 50 $m^2/g$, pouvant aller jusqu'à 500 $m^2/g$. Elle peut être utilisée telle quelle, ou après traitement avec des composés organosiliciques normalement utilisés pour cet usage, tels que les silazanes (hexaméthyldisilazane, hexaméthylcyclotrisilazane), les polysiloxanes (octaméthylcyclotétrasiloxane, hexaméthyldisiloxane), les chlorosilanes (triméthylchlorosilane, diméthylvinylchlorosilane, diméthyldichlorosilane, méthylvinyldichlorosilane), les alcoxysilanes (triméthylméthoxysilane, triméthyléthoxysilane, diméthyldiméthoxysilane).

Lors de ce traitement, les composés organosiliciques précités se fixent et/ou réagissent avec la zone superficielle de la silice; il en résulte que cette silice peut contenir jusqu'à 40% de son poids, de préférence jusqu'à 30%, des composés organosiliciques ou de leurs produits de réaction.

La composition antimousse (A) est préparée par malaxage du mélange de l'huile (h) et de la silice (s); ce malaxage doit assurer une dispersion homogène de la silice au sein de l'huile. Un procédé particulièrment efficace comprend, dans une première phase, le broyage dans un broyeur à colloïdes d'un prémélange de l'huile et de la silice et, dans une deuxième phase, le chauffage du broyat obtenu pendant une durée de 1 à 12 heures vers 60—200° C. Dans un autre procédé on chauffe le prémélange dans les mêmes conditions que le broyat précédent et ensuite passe le prémélange ainsi traité dans un broyeur à colloïdes.

Dans la composition antimousse (A), ayant l'aspect d'une pâte coulante, peuvent être incorporés, par simple mélange, des polymères organopolysiloxaniques choisis dans le groupe constitué:

— des huiles diorganopolysiloxaniques hydroxylées de formule $HOR_2SiO(R_2SiO)_{n''}H$ dans laquelle les symboles R, identiques ou différents, ont la signification donnée ci-avant pour les huiles (h), le symbole n'' représente un nombre entier ou fractionnaire ayant une valeur suffisante pour assurer une viscosité de 10 à 500 mPa · s à 25° C.

De préférence sont utilisées les huiles diméthylpolysiloxaniques hydroxylées de formule

$$HO(CH_3)_2SiO[(CH_3)_2SiO]_{n'''}H,$$

dans laquelle le symbole n''' représente un nombre entier ou fractionnaire de valeur suffisante pour assurer une viscosité de 20 à 250 mPa · s à 25° C:

— des copolymères constitués de motifs de formules $R'_3SiO_{0,5}$ et $SiO_2$, dont le rapport molaire $R'_3SiO_{0,5}/SiO_2$ s'étale de 0,4 à 1,2, renfermant jusqu'à 3% de groupes hydroxyles liés aux atomes de silicium; les symboles R' représentent des radicaux méthyles, vinyles, au plus un radical vinyle est présent par motif de formule $R'_3SiO_{0,5}$. De préférence sont utilisés des copolymères constitués de motifs $(CH_3)_3SiO_{0,5}$ et $SiO_2$ dont le rapport molaire s'étale de 0,5 à 1,1,
— des copolymères formés chacun d'une chaîne diméthylpolysiloxanique et d'au moins un bloc polyoxyalcoylènique, la chaîne diméthylpolysiloxanique ayant une masse moléculaire d'au moins 1000 et le bloc polyoxyalcoylènique une masse moléculaire d'au moins 800.

Le bloc polyoxyalcoylènique est formé de motifs de formule $OCH_2CH_2$, ou d'un mélange de motifs de formules

$OCH_2CH_2$ et 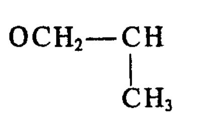

contenant au plus 50% en moles de motifs de formule

$$OCH_2-\underset{\displaystyle CH_3}{\underset{|}{CH}}$$

Il est terminé à son extrémité libre par un radical alcoxyle ayant de 1 à 4 atomes de carbone, un radical hydroxyle ou un radical acétoxyle et il est relié à la chaîne diméthylpolysiloxanique par l'intermédiaire d'une liaison Si—C. Les motifs méthylsiloxy, contenant le bloc polyoxyalcoylènique et la liaison Si—C précitée, sont choisis parmi ceux de formules

$$\underset{\displaystyle G-Q}{\underset{|}{CH_3SiO}} \quad \text{et} \quad \underset{\displaystyle G-Q}{\underset{|}{(CH_3)_2SiO_{0,5}}}$$

dans lequelles le symbole G représente un groupe alcoylène ayant de 1 à 4 atomes de carbone et le symbole Q représente le bloc polyoxyalcoylènique. La chaîne diméthylpolysiloxanique est terminée, à chacune de ses 2 extrémités, par le motif précité

$$\underset{\displaystyle G-Q}{\underset{|}{(CH_3)_2SiO_{0,5}}}$$

et/ou le motif de formule $(CH_3)_3SiO_{0,5}$.

A titre d'exemples concrets de ces copolymères peuvent être cités ceux répondant aux formules ci-après:

$$\underset{\displaystyle G-Q}{\underset{|}{(CH_3)_2Si}}O[(CH_3)_2SiO]_{20}\underset{\displaystyle G-Q}{\underset{|}{Si(CH_3)_2}}$$

avec $G = -(CH_2)_3-$

et $Q = -(OCH_2CH_2)_{15}\left[OCH_2\underset{\displaystyle CH_3}{\underset{|}{CH}}\right]_{10}OH$

$$(CH_3)_3SiO[(CH_3)_2SiO]_{105}\left[\underset{\displaystyle G-Q}{\underset{|}{CH_3SiO}}\right]_{18}Si(CH_3)_3$$

avec $G = -(CH_2)_3-$

et $Q = -(OCH_2CH_2)_{25}\left[OCH_2\underset{\displaystyle CH_3}{\underset{|}{CH}}\right]_{20}OCOCH_3$

Les polymères organopolysiloxaniques précités sont ajoutés à la composition antimousse (A), en quantités variables, généralement assez faibles, de l'ordre de 0,1 à 10 parties pour 100 parties de l'huile diorganopolysiloxanique (h).

L'agent tensio-actif non ionique (B), représentant au plus 5%, de préférence de 0,2 à 3%, des dispersions aqueuses conformes à l'invention, peut être choisi dans le groupe constitué:

- des esters d'acides gras et du sorbitol ou de ses anhydrides, tels que le monostéarate de sorbitan
- des esters d'acides gras et de polyéthylèneglycols tels que les stéarates polyoxyéthylénés qui sont bien souvent commercialisés sous la forme de mélanges de mono et diesters de l'acide stéarique et de polyéthylèneglycols ayant de 7 à 50 motifs de formule $OCH_2CH_2$
- des esters d'acides gras et du sorbitol ou de ses anhydrides ayant réagi avec 4 à 25 moles d'oxyde d'éthylène tels que le monostéarate de sorbitan polyoxyéthyléné ayant environ 20 motifs de formule $OCH_2CH_2$
- des alcoylphénols polyoxyéthylénés et des alcoylmercaptans polyoxyéthylénés dans lesquels le radical alcoyle, linéaire ou ramifié, a de 6 à 18 atomes de carbone et le nombre de motifs de formule $OCH_2CH_2$ s'étale de 3 à 25, tels que le nonylphénol polyoxyéthyléné ayant environ 6 motifs de formule $OCH_2CH_2$ et le dodecylmercaptan polyoxyéthyléné ayant environ 9 motifs de formule $OCH_2CH_2$.

Tous ces agents tensio-actifs sont disponibles sur le marché des produits chimiques.

L'agent épaississant (C) représentant de 0,3 à 2%, de préférence de 0,5 à 1,5%, des dispersions aqueuses conformes à l'invention, est choisi, comme déjà indiqué, parmi les polysaccharides obtenus par fermentation de glucides au moyen d'un microorganisme du genre Xanthomonas.

Ces polysaccharides sont des polymères linéaires de haut poids moléculaire, généralement supérieur à 1 million, issus de la fermention, en milieu aqueux de produits choisis, par exemple, dans le groupe constitué du glucose, du saccharose, du cérulose, du fructose, du maltose, du lactose, de l'amidon soluble, de l'amidon de pomme de terre, de l'amidon de maïs.

Au milieu de fermentation sont ajoutés des dérivés du phosphore, du magnésium. Egalement une source d'azote doit être présente dans le milieu, sous forme de produits organiques (brevets américains 3 000 790, 3 271 267, 3 355 447, brevet français 2 414 555) ou de produits minéraux (brevet américain 3 391 060, brevet français 2 342 339).

Diverses espèces du genre Xanthomonas peuvent être employées pour la fabrication de ces polysaccharides telles que le Xanthomonas Begoniae, le Xanthomonas Incanae, le Xanthomonas Pisi et plus spécialement le Xanthomonas Campestris.

Les techniques de fabrication de ces polysaccharides sont connues depuis de nombreuses années; celles figurant dans les brevets américains et français (cités précédemment pour l'emploi d'une source d'azote), sont assez récentes et de ce fait peuvent être avantageusement suivies. En particulier la technique décrite dans le brevet français 2 415 555 permet d'obtenir des polysaccharides donnant en solution dans l'eau des gels facilement filtrables.

Le procédé de préparation des dispersions aqueuses conformes à l'invention est aisé à exécuter; il comprend en effet, les deux étapes $E_1$ et $E_2$:

— $E_1$ formation d'une solution colloïdale, pseudoplastique, par mélange de l'agent épaississant (C) avec de l'eau
— $E_2$ dispersion dans la solution colloïdale obtenue ci-avant, de la composition organopolysiloxanique antimousse (A)

Lorsque les agents tensio-actifs (B) sont utilisés, ils peuvent être introduits, en totalité:

— soit au cours de l'étape $E_1$, par simple mélange avec l'agent épaississant (C) et l'eau
— soit au cours de l'étape $E_2$, par dispersion dans la solution colloïdale obtenue à l'étape $E_1$, conjointement avec la composition antimousse (A), (ils peuvent, ou non, avoir été préalablement incorporés dans la composition A, par exemple par addition pendant la fabrication de cette composition A ou bien par mélange ultérieurement avec elle)
— soit au cours de l'une et l'autre étape $E_1$ et $E_2$ entre lesquelles ils sont répartis selon une proportion quelconque.

Pour obtenir la solution préparée à l'étape $E_1$ il suffit d'ajouter, par petites quantités, à de l'eau vivement agitée, l'agent épaississant (C); il en résulte la formation d'une solution pseudoplastique ayant l'aspect d'un gel coulant. Ce gel se fluidifie par cisaillement mais retrouve instantanément sa viscosité initiale lorsque la tension de cisaillement est supprimée. Il possède en outre un seuil d'écoulement c'est-à-dire une tension de cisaillement minimale au dessous de laquelle il n'y a pas fluidification.

Sa viscosité varie selon la concentration de l'agent épaississant; elle est, par exemple, de l'ordre de 2000 mPa · s à 25°C pour une concentration de 0,8% en agent épaississant (C) et de l'ordre de 8000 mPa · s à 25°C pour une concentration de 2%, la viscosité étant mesurée avec un viscosimètre Brookfield à 30 tours/minute.

Toutefois la concentration en agent épaississant (C) de cette solution pseudoplastique préparée à l'étape $E_1$ n'est pas quelconque; elle doit être établie en fonction des quantités ajoutées ultérieurement de la composition antimoussante (A) et éventuellement des agents tensio-actifs (B) de manière à conduire à des dispersions conformes à l'invention renfermant de 0,3 à 2% de cet agent épaississant (C).

Au cours de la préparation de la solution pseudoplastique selon l'étape $E_1$, peuvent être ajoutés des agents bactéricides tels que le formol.

Ensuite a lieu l'étape $E_2$ qui comporte la dispersion de la composition antimousse (A) dans la solution pseudoplastique précédente. Cette opération s'effectue facilement en versant la composition (A) dans la solution pseudoplastique vivement agitée; l'utilisation d'un broyeur à colloïdes n'est pas obligatoire.

La dispersion ainsi obtenue est conforme aux dispersions de l'invention. C'est une dispersion relativement concentrée puisqu'elle renferme de 3 à 20% de la composition orgapolysiloxanique (A). Elle possède, en outre, les propriétés de la solution obtenue à l'étape $E_1$; ainsi elle est pseudoplastique et possède un seuil d'écoulement. Par ailleurs elle n'évolue pas au stockage pendant une période d'au moins 12 mois. A titre indicatif sa viscosité peut s'étaler, pour une vitesse de 10 tours/minute du viscosimètre Brookfield, et pour une concentration moyenne des composés qu'elle renferme, de 1500 à 3500 mPa · s à 25°C.

Les dispersions aqueuses de composition organopolysiloxaniques antimousses renfermant, comme agent épaississant du carboxyméthylcellulose, sont nettement moins pseudoplastiques, à concentration égale en agent épaississant, que les dispersions aqueuses renfermant l'agent épaississant (C). Il en résulte qu'il faut dépenser plus d'énergie pour les agiter (lorsqu'on les fabrique, ou leur incorpore des additifs divers, ou simplement les dilue avec de l'eau) que pour agiter les dispersions conformes à

l'invention. De plus, elles ne possèdent pas de seuils d'écoulement, ce que les empêche de maintenir efficacement en suspension les composés qu'elles renferment.

Les dispersions conformes à l'invention sont utilisables dans toutes les opérations industrielles soumises à des problèmes de moussage, telles que les fermentations découlant de l'action de levures, bactéries, champignons sur les milieux nourriciers appropriés (par exemple, les fermentations en vue de la préparation de vitamines et d'antibiotiques), le raffinage du sucre, le traitement des jus sucrés, la préparation d'aliments et de boissons, la teinture, l'ensimage et l'apprêtage des produits textiles,la fabrication du papier, la fabrication d'adhésifs et colles, la fabrication des savons et détergents industriels, la séparation des minerais par flottation, le forage des puits de pétrole, la circulation des fluides hydrauliques et des lubrifiants, la préparation des latex synthétiques.

Ces dispersions étant relativement concentrées peuvent être diluées avant usage dans le rapport pondéral eau de dilution/dispersions allant de 1 à 200, de préférence 2 à 150, ou bien utilisées telles quelles. Les solutions diluées sont également stables au stockage.

L'exemple suivant illustre l'invention:

## Exemple

(I) a) Dans un réacteur équipé d'une turbine à ailettes faisant office d'agitateur et tournant à 2000 tours/minute, on charge successivement, la turbine étant en marche, 88,8 parties d'eau et 0,5 partie d'une solution aqueuse à 30% en poids de formol. Au contenu agité du réacteur on incorpore, en l'espace de 30 minutes, 0,7 partie d'une poudre blanc-crème commercialisée sous le nom de Rhodopol 23 (c'est un polysaccharide issu de la fermentation de glucides à l'aide du Xanthomonas Campestris, il est préparé selon l'enseignement du brevet français 2 414 555).

Le contenu du réacteur est agité, après la fin de l'addition de la poudre, pendant encore 30 minutes. On obtient une solution colloïdale, pseudoplastique ayant l'aspect d'un gel coulant. Sa viscosité mesurée avec un viscosimètre Brookfield, modèle RVT s'élève à 2650 mPa · s à 25° C en utilisant une vitesse de 10 tours/minute et elle s'élève à 395 mPa · s en utilisant une vitesse de 100 tours/minute. Son seuil d'écoulement est de $45 \times 10^{-5}$ N/cm$^2$.

b) On agite la solution colloïdale préparée sous (a) avec la turbine tournant à 2000 tours/minute et y ajoute, en l'espace d'une minute, 10 parties d'un composition antimousse $P_1$ préparée comme décrit ci-après sous (c).

Le mélange est ensuite agité pendant 30 minutes. La dispersion antimousse obtenue a les propriétés de la solution préparée sous (a); elle est donc pseudoplastique et présente les mêmes valeurs de viscosité et de seuil d'écoulement. Ces valeurs n'évoluent pas au bout de 12 mois de stockage de la dispersion en récipients fermés en verre, et la dispersion n'a pas changé d'aspect pendant cette période.

b') Une autre dispersion antimousse pseudoplastique est préparée selon le processus décrit sous (a) et (b), donc avec la même composition antimousse $P_1$; toutefois lors de l'étape (a) on utilise 87,8 parties d'eau au lieu de 88,8 parties et ajoute, après l'introduction de 0,5 partie de la solution de formol et avant l'introduction de 0,7 partie de Rhodopol 23, 1 partie d'un nonylphénol polyoxyéthyléné ayant environ 6 motifs $OCH_2CH_2$, commercialisé sous le nom de Cemulsol NP 6.

Cette dispersion pseudoplastique présente [mesurée comme décrit sous (a)] une viscosité de 2600 mPa · s à 25° C en utilisant une vitesse de 10 tours/minute et de 370 mPa · s à 25° Fc en utilisant une vitesse de 100 tours/minute; son seuil d'écoulement est de l'ordre de $45 \times 10^{-5}$ N/cm$^2$.

b'') Une dispersion antimousse pseudoplastique est préparée en suivant le processus décrit sous (b'), donc en utilisant lors de la préparation de l'étape (a) 1 partie d'un nonylphénol polyoxyéthyléné. Cependant celui-ci est maintenant constitué de 0,5 partie du nonylphénol polyoxyéthyléné précédent ayant 6 motifs $OCH_2CH_2$ et de 0,5 partie d'un nonylphénol polyoxyéthyléné ayant 4 motifs $OCH_2CH_2$, commercialisé sous le nom de Cemulsol NP 4.

Cette dispersion pseudoplastique présente [mesurée comme décrit sous (a)] une viscosité de 2850 mPa · s à 25° C en utilisant une vitesse de 10 tours/minute et de 400 mPa · s à 25° C en utilisant une vitesse de 100 tours/minute; son seuil d'écoulement est également de l'ordre de $45 \times 10^{-5}$ N/cm$^2$.

### c) Préparation de la composition antimousse $P_1$

Dans un réacteur muni d'une agitation on charge 100 parties d'une huile $\alpha$-$\omega$bis(triméthylsiloxy)diméthylpolysiloxanique de viscosité 100 mPa · s à 25° C. On met en route l'agitation et ajoute progressivement à l'huile chargée 5,5 parties d'une silice de combustion de surface spécifique 200 m$^2$/g, de diamètre moyen des particules primaires 30 nm.

Le mélange ainsi formé est agité pendant 1 heure; il est ensuite broyé par passage dans un broyeur à colloïdes, la température de broyage étant comprise entre 45—50° C et l'écartement du broyeur réglé à 0,25 mm. Le mélange broyé tombe dans un autre réacteur où il est chauffé pendant 4 heures à 170° C. Après refroidissement du mélange vers 30° C, on y incorpore, par simple agitation, 2,2 parties

d'une huile $\alpha$-$\omega$di(hydroxy)diméthylpolysiloxanique de viscosité 50 mPa · s à 25°C et 5,5 parties d'un dodecylmercaptan polyoxyéthyléné ayant 9 groupes $OCH_2CH_2$.

La composition antimousse obtenue, nommée $P_1$, a l'aspect d'une pâte coulante gris-pâle, opaque, pseudoplastique; elle présente, mesurée comme décrit sous (a), une viscostié de 7500 mPa · s à 25°C en utilisant une vitesse de 10 tours/minute et de 1050 mPa · s à 25°C en utilisant une vitesse de 100 tours/minute; son seuil d'écoulement est de $25 \times 10^{-5}$ N/cm$^2$.

(II) Pour déterminer le pouvoir antimousse des dispersions pseudoplastiques b, b' et b'', on utilise un appareil d'agitation de laboratoire à usage multiple, possédant un axe horizontal oscillant sur lequel sont fixés, à angle droit et horizontalement, des bras métalliques dont les extrémités possèdent des pinces d'une ouverture suffisante pour tenir fortement des poudriers en verre d'une contenance de 250 cm$^3$.

La fréquence des oscillations de l'axe est d'environ 250 par minute; l'amplitude de chaque oscillation au niveau de l'insertion des poudriers est de 5 cm. Le réglage d'une minuterie électronique permet d'établir un cycle de démoussage constitué d'un temps d'agitation de 10 s et d'un temps d'arrêt de 60 s.

On utilise également une solution moussante fabriquée par simple mélange de:

| | |
|---|---|
| — eau distillée | 1000 cm$^3$ |
| — nonylnaphtalènesulfonate de sodium | 5 g |
| — acide acétique | 3 g |
| — acétate de sodium | 7 g. |

On introduit, dans chaque poudrier en verre, 100 cm$^3$ de la solution moussante ci-dessus et 50 mg de l'une des dispersions b, b' ou b'' et met l'agitation de l'appareil en marche. On note lors du premier cycle de démoussage, à partir de l'arrêt de l'agitation, donc pendant la période d'arrêt de 60 s, le temps mis par la mousse dans le poudrier pour disparaître; c'est le temps nécessaire au premier démoussage $T_1$.

On note ensuite le nombre total de cycles de démoussage pour lesquels le temps de démoussage est inférieur ou égal à 60 s; ce nombre est nommé N.

On constate qu'avec les 3 dispersions antimousses b, b' et b'':

1) le temps $T_1$, nécessaire au premier démoussage, est de l'ordre de 3 secondes,
2) le nombre de cycles de démoussage N est de l'ordre de 25.

A titre comparatif on détermine, selon le processus précédent, le pouvoir antimousse de la composition antimousse $P_1$. A cet effet on introduit, dans chaque poudrier, 5 mg de cette composition $P_1$ et 100 cm$^3$ de la solution moussante utilisée précédemment. On note le temps de premier démoussage $T_1$ et le nombre N de cycles de démoussage et trouve les valeurs suivantes:

$T_1$, de l'ordre de 3 secondes
N, de l'ordre de 32.

Il résulte de l'examen de ces résultats que le pouvoir antimousse de la composition $P_1$ n'est pas dégradée lorsqu'on disperse cette composition dans la solution colloïdale pseudoplastique (a) ou du type (a) pour faire les dispersions b, b' et b'' (ces dernières renferment chacune 10% de cette composition $P_1$ soit 5 mg pour une prise d'échantillon de 50 mg).

A titre comparatif également on fabrique une solution colloïdale (a') analogue à la solution (a) en remplaçant poids pour poids le Rhodopol 23 par le Blanose R 105® qui est un carboxyméthylcellulose.

Cette solution (a') présente une viscosité, mesurée avec le viscosimètre Brookfield, de 2 mPa · s à 25°C en utilisant aussi bien une vitesse de 10 tours/minute qu'une vitesse de 100 tours/minute. Il est clair que cette solution n'est pas pseudoplastique.

A cette solution (a') sont ajoutées, en suivant le mode opératoire décrit sous (b), 10 parties de la composition antimousse $P_1$; le mélange est ensuite agité pendant 30 minutes. On obtient une dispersion b''' ayant les valeurs de viscosité de la solution (a').

Cette dispersion est instable; en effet au bout de 10 heures de stockage en récipients fermés en verre on constate qu'elle est devenue hétérogène; elle s'est séparée en 2 parties distinctes. D'autre part on détermine son pouvoir antimousse en utilisant l'appareil d'agitation décrit ci-avant ainsi que le processus mis en œuvre avec les dispersions b, b' et b''.

On note le temps de premier démoussage $T_1$ et le nombre N de cycles de démoussage et trouve les valeurs suivantes:

$T_1$, de l'ordre de 3 secondes
N, de l'ordre de 15.

Il en résulte que le pouvoir antimousse de la dispersion b''' est inférieur à celle des dispersions b, b'

et b".

**Revendications**

1. Dispersions aqueuses de compositions organopolysiloxaniques comprenant:

A) 3 à 20% en poids d'une composition organopolysiloxanique antimousse
B) 0 à 5% en poids d'un ou plusieurs agents tensio-actifs non ioniques
C) 0,3 à 2% en poids d'un agent épaississant

et de l'eau en quantité suffisante pour compléter à 100%, caractérisées en ce que l'agent épaississant (C) est choisi parmi les polysaccharides obtenus par fermentation de glucides au moyen d'un microorganisme du genre Xanthomonas.

2. Dispersions aqueuses selon la revendication 1, caractérisées en ce que le microorganisme du genre Xanthomonas est choisi parmi les Xanthomonas Begoniae, le Xanthomonas Incanae, le Xanthomonas Pisi et le Xanthomonas Campestris.

3. Procédé de préparation des compositions selon l'une quelconque des revendications 1 et 2, caractérisé en ce que:

— $E_1$ l'on forme d'abord une solution colloïdale pseudoplastique par mélange de l'agent épaississant (C) avec de l'eau,
— $E_2$ puis on disperse dans la solution colloïdale, obtenue à l'étape $E_1$, la composition organopolysiloxanique antimousse (A).

4. Procédé de préparation selon la revendication 3, caractérisé en ce que les agents tensio-actifs (B) sont introduits au cours de l'étape $E_1$, par simple mélange avec l'agent épaississant (C) et l'eau.

5. Procédé de préparation selon la revendication 3, caractérisé en ce que les agents tensio-actifs (B) sont introduits au cours de l'étape $E_2$, par dispersion dans la solution colloïdale obtenue à l'étape $E_1$, conjointement avec la composition organopolysiloxanique antimousse (A) préalablement incorporés ou non dans cette composition.

6. Procédé de préparation selon la revendication 3, caractérisé en ce que les agents tensio-actifs (B) sont introduits au cours de l'une et l'autre étape $E_1$ et $E_2$, en suivant les processus décrits respectivement aux revendications 4 et 5, la répartition entre ces 2 étapes étant quelconque.

7. Dispersions aqueuses, diluées, de compositions organopolysiloxaniques, caractérisées en ce qu'elles sont obtenues par dilution, avec de l'eau, des dispersions aqueuses selon l'une quelconque des revendications 1 et 2, le rapport pondéral eau de dilution/dispersions aqueuses des revendications 1 et 2, allant de 1 à 200.

8. Utilisation des dispersions aqueuses selon l'une quelconque des revendications 1, 2 ou 7 comme agents antimousses.

**Patentansprüche**

1. Wäßrige Dispersionen von Organopolysiloxan-Zusammensetzungen, umfassend:

A) 3 bis 20 Gew.-% einer Antischaum-Organopolysiloxan-Zusammensetzung,
B) 0 bis 5 Gew.-% eines oder mehrerer nicht-ionischer oberflächenaktiver Mittel,
C) 0,3 bis 2 Gew.-% eines Verdickungsmittels

und Wasser in ausreichender Menge, um auf 100% zu ergänzen, dadurch gekennzeichnet, daß das Verdickungsmittel (C) ausgewählt ist unter den Polysacchariden, die durch Fermentation von Gluciden mittels eines Mikroorganismus der Art Xanthomonas erhalten sind.

2. Wäßrige Dispersionen gemäß Anspruch 1, dadurch gekennzeichnet, daß der Mikroorganismus der Art Xanthomonas ausgewählt ist unter Xanthomonas Begoniae, Xanthomonas Incanae, Xanthomonas Pisi und Xanthomonas Campestris.

3. Verfahren zur Herstellung der Zusammensetzungen gemäß einem der Ansprüche 1 und 2, dadurch gekennzeichnet, daß

— $E_1$ man zunächst eine kolloidale Pseudoplastiklösung durch Vermischen des Verdickungsmittels (C) mit Wasser bildet,
— $E_2$ dann in der kolloidalen Lösung, die in Stufe $E_1$ erhalten wurde, die Antischaum-Organopolysiloxan-Zusammensetzung (A) dispergiert.

4. Herstellungsverfahren gemäß Anspruch 3, dadurch gekennzeichnet, daß die oberflächenaktiven

Mittel (B) im Verlaufe der Stufe $E_1$ durch einfaches Vermischen mit dem Verdickungsmittel (C) und dem Wasser eingeführt werden.

5. Herstellungsverfahren gemäß Anspruch 3, dadurch gekennzeichnet, daß die oberflächenaktiven Mittel (B) im Verlaufe der Stufe $E_2$ eingeführt werden durch Dispersion in der in Stufe $E_1$ erhaltenen kolloidalen Lösung zusammen mit der Organopolysiloxan-Antischaum-Zusammensetzung (A), wobei die oberflächenaktiven Mittel (B) vorher oder nicht in diese Zusammensetzung einverleibt wurden.

6. Herstellungsverfahren gemäß Anspruch 3, dadurch gekennzeichnet, daß die oberflächenaktiven Mittel (B) im Verlaufe der einen oder anderen Stufe $E_1$ und $E_2$ eingeführt werden, indem die in den Ansprüchen 4 bzw. 5 beschriebenen Verfahren verfolgt werden, wobei die Verteilung zwischen diesen beiden Stufen beliebig ist.

7. Wäßrige verdünnte Dispersionen der Organopolysiloxan-Zusammensetzungen, dadurch gekennzeichnet, daß sie durch Verdünnung der wäßrigen Dispersionen gemäß einem der Ansprüche 1 und 2 mit Wasser erhalten sind, wobei das Gewichtsverhältnis Verdünnungswasser/wäßrige Dispersionen der Ansprüche 1 und 2 von 1 bis 200 geht.

8. Verwendung der wäßrigen Dispersionen gemäß einem der Ansprüche 1, 2 oder 7 als Antischaum-Mittel.

**Claims**

1. Aqueous dispersions of organopolysiloxane compositions comprising:

A) 3 to 20% by weight of an organopolysiloxane antifoam composition
B) 0 to 5% by weight of one or more non-ionic surface-active agents
C) 0.3 to 2% by weight of a thickener

and a sufficient quantity of water to make up to 100%, characterized in that the thickener (C) is chosen from the polysaccharides obtained by fermenting carbohydrates by means of a microorganism of the genus Xanthomonas.

2. Aqueous dispersions according to Claim 1, characterized in that the microorganism of the genus Xanthomonas is chosen form Xanthomonas begoniae, Xanthomonas incanae, Xanthomonas pisi and Xanthomonas campestris.

3. A process for the preparation of the compositions according to either one of Claims 1 and 2, characterized in that:

— $E_1$ a pseudo-plastic colloidal solution is initially formed by mixing the thickener (C) with water, and
— $E_2$ the organopolysiloxane antifoam composition (A) is then dispersed in the colloidal solution obtained in step $E_1$.

4. The process of preparation according to Claim 3, characterized in that the surface-active agents (B) are introduced during step $E_1$ by simply being mixed with the thickener (C) and the water.

5. The process of preparation according to Claim 3, characterized in that the surface-active agents (B) are introduced during step $E_2$ by being dispersed in the colloidal solution obtained in step $E_1$, conjointly with the organopolysiloxane antifoam composition (A), which surface-active agents may or may not have been incorporated into this composition beforehand.

6. The process of preparation according to Claim 3, characterized in that the surface-active agents (B) are introduced during both steps $E_1$ and $E_2$ following the procedures described respectively in Claims 4 and 5, any distribution between these 2 steps being possible.

7. Dilute aqueous dispersions of organopolysiloxane compositions, characterized in that they are obtained by diluting with water the aqueous dispersions according to either one of Claims 1 and 2, the weight ratio of diluting water/aqueous dispersions of Claims 1 and 2 ranging from 1 to 200.

8. The use of the aqueous dispersions according to any one of Claims 1, 2 and 7 as antifoams.